# EUROPEAN PATENT SPECIFICATION

(11) **EP 2 566 023 B1**
(45) Date of publication and mention of the grant of the patent: **15.07.2020**
(21) Application number: 12180593.1
(22) Date of filing: 16.08.2012
(51) Int. Cl.: H02M 1/12

(54) **Line filter for a switching power supply**
Netzfilter für ein Schaltnetzteil
Filtre réseau pour un dispositif d'alimentation à découpage

(30) Priority: 31.08.2011 JP 2011188958; 18.07.2012 JP 2012159516
(43) Date of publication of application: 06.03.2013
(73) Proprietor: Canon Kabushiki Kaisha, Ohta-ku Tokyo 146-8501 (JP)
(72) Inventor: Isono, Aoji, Ohta-ku, Tokyo (JP)
(74) Representative: Hitching, Peter Matthew

(56) References cited:
- JP-A- H11 356 047
- JP-A- 2008 236 988
- US-A- 4 667 173

## Description

### BACKGROUND OF THE INVENTION

### Field of the Invention

The present invention relates to a line filter provided as a noise filter in a converter configured to rectify and convert an alternating-current (AC) voltage input from a commercial AC power supply.

### Description of the Related Art

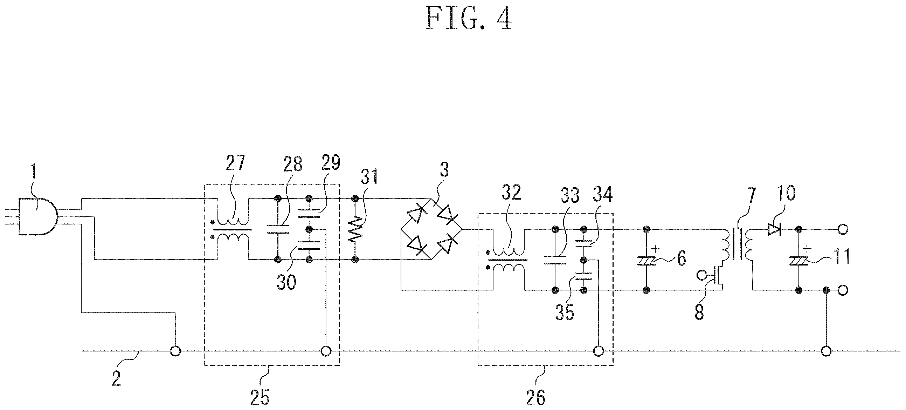

As illustrated in Fig. 4, a conventional line filter includes a first noise filter 25 between a power plug 1 plugged and unplugged to/from a commercial AC power supply and a rectifier unit 3 for rectifying an input AC voltage, a second noise filter 26 between the rectifier unit 3 and a transformer 7, and a resistor 31 between the power plug 1 and the rectifier unit 3 (as disclosed for example in the US patent application Nr. 4,667,173).

The first noise filter 25 includes a first choke coil 27, a first X capacitor (across-the-line capacitor) 28, and first Y capacitors (line-bypass capacitors) 29 and 30 connected to the earth (also referred to as the ground) 2.

The second noise filter 26 includes a second choke coil 32, a second X capacitor 33, and second Y capacitors 34 and 35 connected to the earth 2.

The above-described conventional line filter has yet the following first problem since the influence of a radiation unit for radiating heat generated during operation of a switching unit 8 for driving the transformer 7 has not been taken into consideration.

When the switching unit 8 operates, the switching unit 8 and the radiation unit are electrically coupled and a current flows through a stray capacitance between the radiation unit and the earth 2, resulting in common mode noise.

In the conventional line filter, since measures for common mode noise caused by the radiation unit is not taken into consideration, additional noise reduction measures are required for a configuration having the radiation unit configured to radiate heat generated during operation of the switching unit 8.

The above-described conventional line filter has yet a second problem that the resistor 31 between the commercial AC power supply and the rectifier unit (also referred to as a rectification bridge) 3 consumes electric power that does not contribute to power supply.

The resistor 31 is a discharge resistor for discharging the energy (charge) accumulated in the first X capacitor 28 connected between the output lines of the power plug 1 plugged and unplugged to/from the commercial AC power supply. Thus, when the power plug 1 is unplugged, the resistor 31 ensures user's safety even if the user touches a terminal of the power plug 1.

An international safety standard prescribes that, if the capacitance of an electromagnetic interference (EMI) filter exceeds a threshold value (typically, 0.1 µF), the voltage between both input terminals of the power source shall be reduced to a safe level within a predetermined time period after the power plug is unplugged.

Therefore, in the configuration having the radiation unit for radiating heat generated during operation of the switching unit 8, the performance of an existing noise filter is enhanced or a new noise filter is added, resulting in an increase in capacitance between the output lines of the power plug 1. Therefore, it has been necessary to increase the resistance value of the resistor 31.

Accordingly, power consumption (by the discharge resistor) that does not contribute to power supply has increased. This problem affects the reduction in power consumption particularly in a case where the switching unit 8 does not operate. The document JP-H11 356047 discloses a common mode EMI filter for an isolated switching power supply, wherein noise currents flow through a heatsink on the primary side of the power supply.

### SUMMARY OF THE INVENTION

The present invention is directed to a line filter capable of sufficiently reducing noise in a configuration having a radiation unit for radiating heat generated during operation of a switching unit. Further, the present invention is directed to a line filter capable of reducing the power consumption related to a discharge resistor for discharging the charge accumulated in an X capacitor connected between output lines of a power plug.

According to a first aspect of the present invention, there is provided a line filter as specified in claims 1 to 6. According to a second aspect of the present invention, there is provided a switching power supply as specified in claim 7. According to a third aspect of the present invention, there is provided an image forming apparatus as specified in claim 8.

Further features and aspects of the present invention will become apparent from the following detailed description of exemplary embodiments with reference to the attached drawings.

### BRIEF DESCRIPTION OF THE DRAWINGS

The accompanying drawings, which are incorporated in and constitute a part of the specification, illustrate exemplary embodiments, features, and aspects of the invention and, together with the description, serve to explain the principles of the invention.
Figs. 1A, 1B, and 1C each illustrate a configuration of a line filter according to a first exemplary embodiment.
Fig. 2 illustrates a configuration of a line filter according to a second exemplary embodiment.
Figs. 3A, 3B, and 3C each illustrate a configuration of a line filter according to a third exemplary embodiment.
Fig. 4 illustrates an example configuration of a conventional line filter.
Figs. 5A and 5B illustrate application examples of a switching power supply mounting the line filter according to the exemplary embodiments of the present invention.

### DESCRIPTION OF THE EMBODIMENTS

Various exemplary embodiments, features, and aspects of the invention will be described in detail below with reference to the drawings.

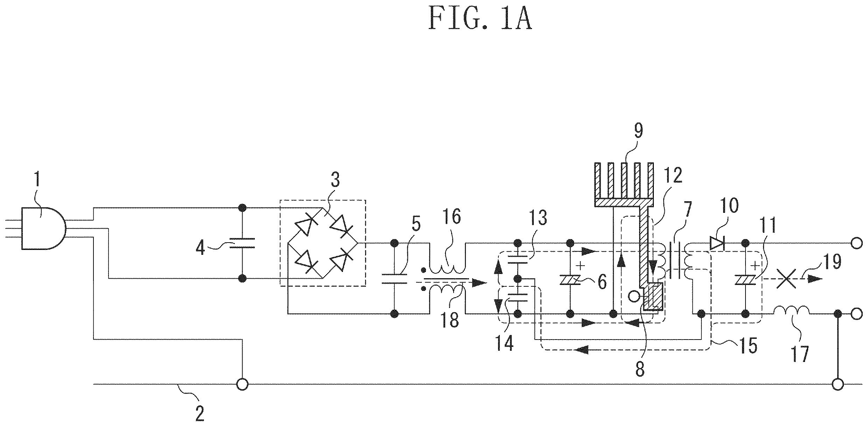

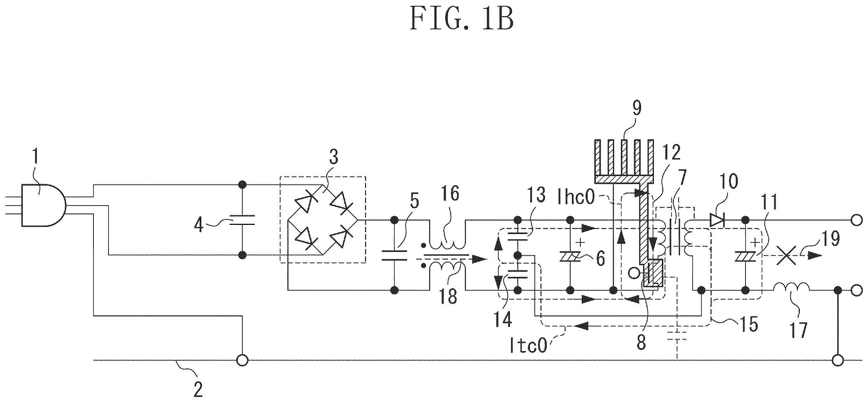

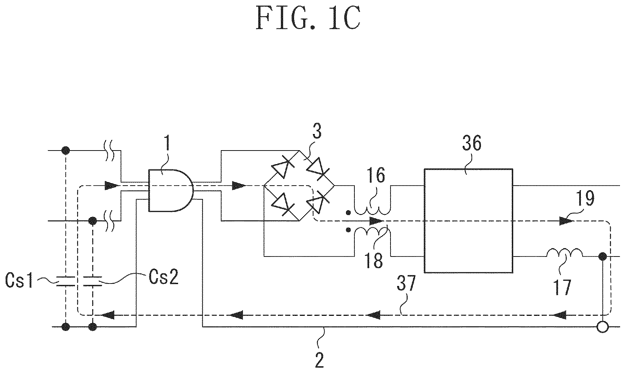

Figs. 1A, 1B, and 1C each illustrate a configuration of a line filter according to a first exemplary embodiment. Figs. 1A and 1B illustrate a circuit of a switching power supply (also referred to as an AC/DC converter) . The circuit rectifies and smoothes an AC voltage input from a commercial AC power supply and supplies a resultant voltage to a transformer 7. A switching unit 8 drives the primary side of the transformer 7 to generate an AC voltage on the secondary side of the transformer 7. Then, the circuit rectifies and smoothes the resultant AC voltage to output a resultant DC voltage.

Referring to Fig. 1A, a power plug 1 is plugged and unplugged to/from the commercial AC power supply. The earth 2 is connected to an earth terminal (also referred to as a ground terminal) of the power plug 1. A rectifier unit (also referred to as a rectification bridge) 3 rectifies an input AC voltage.

A third capacitor 4 is connected between the lines at a position between the power plug 1 and the rectifier unit 3. A fourth capacitor 5 is connected between rectification output lines of the rectifier unit 3 at a position immediately after the rectifier unit 3. A first smoothing capacitor 6 smoothes the rectified voltage output from the rectifier unit 3. The transformer 7 transforms a voltage input via the first smoothing capacitor 6 and outputs a resultant voltage.

The switching unit 8 is connected to the transformer 7. A radiation unit 9 radiates heat generated during operation of the switching unit 8. In the present exemplary embodiment, the switching unit 8 includes a field effect transistor (FET). The radiation unit 9 is provided with a radiation pattern.

A rectifier diode 10 rectifies the output voltage of the transformer 7. A second smoothing capacitor 11 smoothes the output of the rectifier diode 10. A first current path 12 feeds a current flowing through the radiation unit 9 back to the switching unit 8.

One end of a first capacitor 13 is connected to the positive electrode side of the line between the fourth capacitor 5 and the transformer 7. One end of a second capacitor 14 is connected to the negative electrode side of the line between the fourth capacitor 5 and the transformers 7. A second current path 15 feeds an output current of the transformer 7 back to the switching unit 8 via the first capacitor 13 and the second capacitor 14.

A first coil 16 suppresses a common mode current 18 flowing between the third capacitor 4 and the first and second capacitors 13 and 14. A second coil 17 suppresses a common mode current 19 flowing between the transformer 7 and the output.

Although, in the present exemplary embodiment, two different current paths (first and second current paths) are provided, a configuration having either one of the current paths enables acquiring the effect of noise current reduction.

Operations of the line filter according to the present exemplary embodiment will be described below with reference to Fig. 1B. Referring to Fig. 1B, a current Ihc0 flowing through the radiation unit 9 configured to radiate heat generated during operation of the switching unit 8 is fed back to the switching unit 8 via the first current path 12 separately provided from the earth 2 coupled with the stray capacitance.

Another current ItcO flowing to the output side of the transformer 7 generated during the operation of the switching unit 8 is fed back to the switching unit 8 via the second current path 15 and the first and second capacitors 13 and 14.

Although, in the present exemplary embodiment, the current ItcO has been described to be fed back to the switching unit 8 via the first capacitor 13 and the second capacitor 14, even if either one of the capacitors 13 and 14 is provided, the current ItcO can be fed back to the switching unit 8 via the connection path of the capacitor.

Suppressing the common mode current 18 via the first coil 16 enables preventing the common mode current 18 generated during the operation of the switching unit 8 from flowing to the side of the commercial AC power supply.

Suppressing the common mode current 19 via the second coil 17 enables preventing the common mode current 19 generated during the operation of the switching unit 8 from flowing to the output side.

The path of the common mode current will be described below with reference to Fig. 1C. Fig. 1C illustrates a simplified connection on the side of the commercial AC power supply illustrated in Fig. 1A.

Since the third capacitor 4 and the fourth capacitor 5 are not illustrated since they form a circuit for normal mode noise measures. For simplification, the components 6 to 15 in Fig. 1A are illustrated as a four-terminal network 36.

On the side of the commercial AC power supply where the power plug 1 is connected, the earth 2 and respective power lines are coupled by capacitances Cs1 and Cs2. A common mode current 37 flows between the earth 2 and the lines.

Although, in Figs. 1A and 1B, the common mode currents 18 and 19 are described to be different currents, both currents are actually identical to the common mode current 37. Therefore, in Fig. 1B, the configuration of the line filter has been described to include two coils (the first coil 16 and the second coil 17), a similar effect can be acquired with either one of the coils.

Although, in Fig. 1B, a common mode choke coil is used as the first coil 16 and a normal coil as the second coil 17, the first and second coils 16 and 17 are not limited thereto as long as they can suppress the common mode current.

Although, in Fig. 1B, the first capacitor 13 and the second capacitor 14 are provided between the first coil 16 and the first smoothing capacitor 6, the configuration is not limited thereto as long as they are provided between the first coil 16 and the transformer 7.

A noise filter near the rectifier unit 3 will be described below with reference to Fig. 1A. While the rectifier unit 3 is rectifying the AC voltage, specifically, during a time period when a forward current flows from the input side to the output side of the rectifier unit 3 the fourth capacitor 5 functions as a noise filter similar to the third capacitor 4. During a period when a reverse current flows from the output side to the input side of the rectifier unit 3, only the third capacitor 4 functions as a noise filter.

A reverse current flows from the output side to the input side of the rectifier unit 3 mainly because of a recovery current due to recovery characteristics of the rectifier unit 3 (recovery characteristics of a rectifier diode).

The capacitance of the third capacitor 4 is set to bypass noise component contained in the reverse current, and the capacitance of the fourth capacitor 5 is set to provide a capacitance for filtering noise component contained in the forward current.

As mentioned above, even without separately providing a discharge resistor for discharging the charge accumulated in the capacitor 4, decreasing the capacitance of the third capacitor 4 between the lines at a position between the power plug 1 and the rectifier unit 3 enables ensuring user's safety even if the user touches a terminal of the power plug 1 when the power plug 1 is unplugged.

In this case, the capacitance (including the third capacitor 4) between the lines at a position between the power plug 1 and the rectifier unit 3 is set to 0.1 µF or less based on the international safety standard. Therefore, it is not necessary to provide a discharge resistor for discharging the capacitance between the lines at a position between the power plug 1 and the rectifier unit 3. This enables reducing the power consumption that does not contribute to the power supply related to the capacitor connected between the output lines of the power plug 1.

For example, in conventional cases, when the capacitance of the first X capacitor 28 is 1.0 µF, the capacitance of the third capacitor 4 is set to 0.1 µF and the capacitance of the fourth capacitor 5 to 0.9 µF.

In conventional cases, if an optimum capacitance of the first X capacitor 28 is 10.1 µF, it is necessary to set a capacitance smaller than the optimum capacitance in consideration of the power consumption. In the present exemplary embodiment, the capacitance of the third capacitor 4 can be set to 0.1 µF and the capacitance of the fourth capacitor 5 to 10.0 µF.

In the configuration according to the present exemplary embodiment, the rectifier unit 3 separates the fourth capacitor 5 from the capacitor connected between the output lines of the power plug 1 when the power plug 1 is unplugged.

As described above, the present exemplary embodiment enables suppressing noise due to the influence of a radiation unit configured to radiate heat generated during operation of the switching unit.

The present exemplary embodiment further enables eliminating a discharge resistor as a discharge unit for discharging the charge accumulated in the X capacitor, resulting in reduced power consumption.

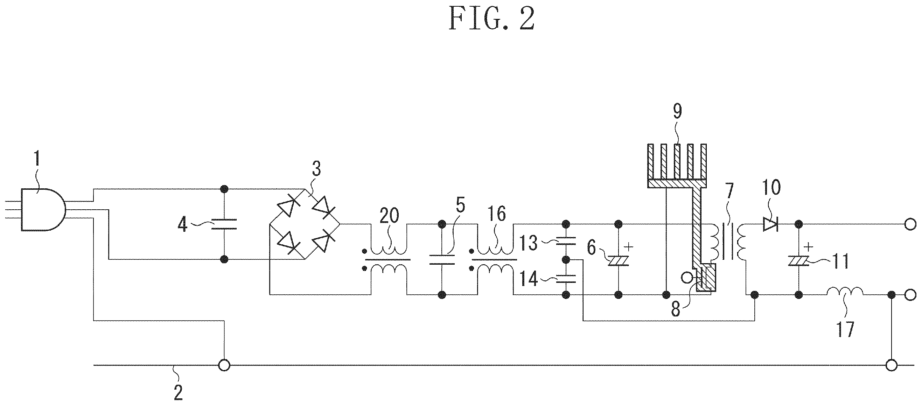

A second exemplary embodiment will be described below. Fig. 2 illustrates a line filter according to the second exemplary embodiment, having a modified configuration of the circuit according to the first exemplary embodiment. Differences of the line filter according to the second exemplary embodiment from the line filter according to the first exemplary embodiment will be described below.

As illustrated in Fig. 2, the line filter according to the second exemplary embodiment has a circuit configuration in which a common mode choke coil 20 for suppressing a common mode current is connected between the rectifier unit 3 and the fourth capacitor 5.

This circuit configuration enables enhancing characteristics for suppressing a common mode current generated during operation of a switching unit 8. This enables configuring a noise filter optimized for a common mode current having a frequency to be suppressed.

Although the present exemplary embodiment has been described to apply a common mode choke coil for suppressing a common mode current, the coil configured to suppress a common mode current is not limited thereto.

If the common mode choke coil 20 is used as a coil for suppressing the common mode current, the common mode choke coil 20 has a coupling factor as close as possible to "1" (maximum value). When the coupling factor is "0.99", for example, a value "20.01" functions also as a normal mode coil.

Specifically, using a common mode choke coil configured to have a coupling factor smaller than "1" as the first common mode choke coil 20 and the first coil 16 enables the first common mode choke coil 20, the fourth capacitor 5, and the first coil 16 to function as a normal-mode T-type LC filter, without increasing the number of parts.

A coupling factor for achieving both the normal-mode filter function and the common-mode filter function may be suitably set based on the current value to be suppressed.

As described above, the present exemplary embodiment also enables suppressing noise due to the influence of the radiation unit configured to radiate heat generated during operation of the switching unit.

The present exemplary embodiment further enables eliminating the discharge resistance of a radiation unit configured to discharge the charge accumulated in the X capacitor, resulting in reduced power consumption. The present exemplary embodiment further enhances a function of suppressing a common mode current to suppress common mode noise.

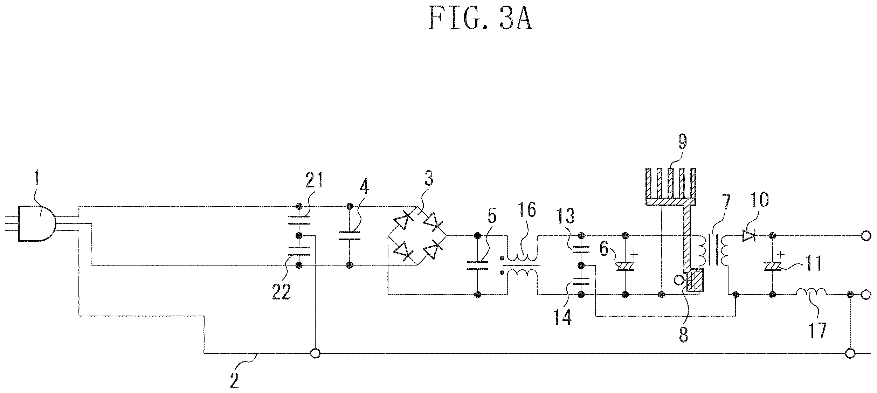

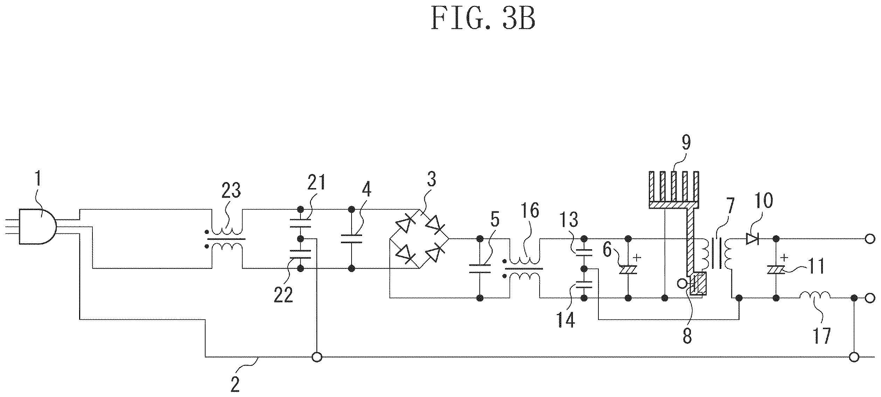

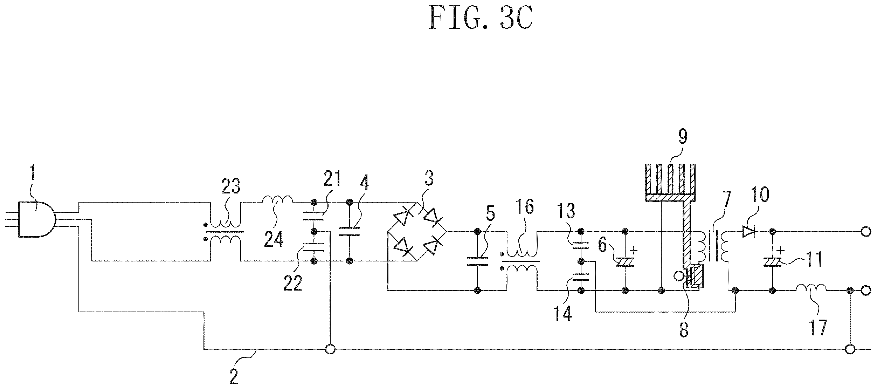

A third exemplary embodiment will be described below. Figs. 3A, 3B, and 3C each illustrate a line filter according to the third exemplary embodiment, having a modified configuration of the circuit according to the first exemplary embodiment.

Differences of the line filter according to the third exemplary embodiment from the line filter according to the first exemplary embodiment will be described below. As illustrated in Figs. 3A to 3C, in the third exemplary embodiment, another noise filter is added between the power plug 1 and the rectifier unit 3.

Referring to a circuit configuration illustrated in Fig. 3A, a fifth capacitor 21 and a sixth capacitor 22 are connected in series between the power plug 1 and the rectifier unit 3.

A connecting portion of the fifth capacitor 21 and the sixth capacitor 22 is connected to the earth 2.

This circuit configuration, if the common mode current by the stray capacitance between the rectifier unit 3 and the earth 2 has a large influence, enables bypassing the common mode current to the earth 2 via the fifth capacitor 21 and the sixth capacitor 22. This prevents the common mode current from flowing to the side of the commercial AC power supply.

Referring to a circuit configuration illustrated in Fig. 3B, in addition to the circuit configuration illustrated in Fig. 3A, a common mode choke coil 23 for suppressing a common mode current is connected between the power plug 1 and the fifth and sixth capacitors 21 and 22.

This circuit configuration suppresses the common mode current via the second common mode choke coil 23, which prevents the common mode current from flowing to the side of the commercial AC power supply to further extent than the circuit configuration illustrated in Fig. 3A.

Although the circuit has been described to apply the common mode choke coil 23 as a coil for suppressing a common mode current, the coil for suppressing the common mode current is not limited thereto.

Referring to a circuit configuration illustrated in Fig. 3C, in addition to the circuit configuration illustrated in Fig. 3B, a normal mode choke coil 24 is connected between a common mode choke coil 23 for suppressing a common mode current and the third capacitor 4.

This circuit configuration provides high impedance of the lines via the normal mode choke coil 24, resulting in an improved performance of bypassing the normal mode current of the third capacitor 4. As a result, this circuit configuration enables preventing the normal mode current from flowing to the side of the commercial AC power supply to further extent than the circuit configuration illustrated in Fig. 3B.

As described above, the present exemplary embodiment also enables suppressing noise due to the influence of the radiation unit configured to radiate heat generated during operation of the switching unit. The present exemplary embodiment further enables eliminating the discharge resistor as a discharge unit configured to discharge the charge accumulated in the X capacitor, resulting in reduced power consumption.

The present exemplary embodiment further enables suppressing common mode noise by adding a circuit for suppressing a common mode current to the circuit configuration. The present exemplary embodiment further enables suppressing normal mode noise by adding a circuit for suppressing a normal mode current to the circuit configuration.

A switching power supply mounting the above-described line filter is applicable to a low-voltage power supply in an image forming apparatus such as a printer, a copying machine, and a facsimile. Specifically, the switching power supply is applicable to a power supply for supplying the power to a controller as a control unit of an image forming apparatus.

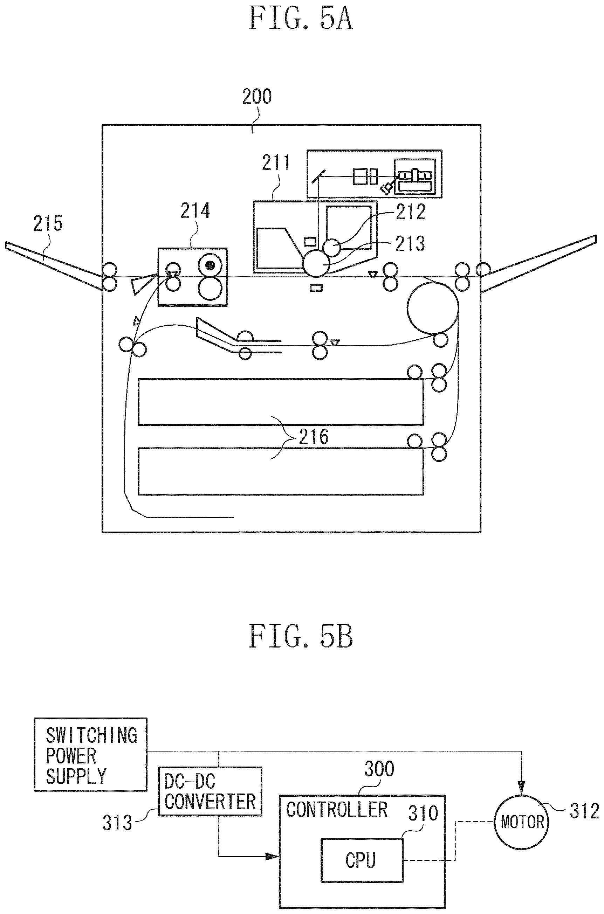

Fig. 5A schematically illustrates a configuration of a laser beam printer as an example of an image forming apparatus. A laser beam printer 200 includes an image forming unit 211 provided with a photosensitive drum 213 as an image bearing member, on which a latent image is formed, and a development unit 212 configured to develop with toner the latent image formed on the photosensitive drum 213 to form a toner image thereon.

The toner image developed on the photosensitive drum 213 is transferred onto a sheet (not illustrated) as a recording material supplied from a cassette 216. Then, the toner image transferred onto the sheet is fixed thereon via a fixing unit 214, and the sheet is discharged onto a tray 215.

Fig. 5B illustrates a power supply line from the switching power supply to the controller, as a control unit, of the image forming apparatus. The switching power supply mounting the above-described line filter is applicable to a low-voltage power supply for supplying the power to a controller 300 including a central processing unit (CPU) 310 for controlling an image forming operation of the image forming apparatus, or to a motor 312 as a driving unit.

If there is a plurality of targets of power supply as illustrated in Fig. 5B, a DC/DC converter 313 for converting the voltage from the switching power supply may be provided to supply the power to the controller 300.

This circuit configuration, when the image forming apparatus is operating, enables suppressing the influence of noise due to the radiation unit configured to radiate heat generated during operation of the switching unit. Further, when the image forming apparatus is not operating, in power-saving state, the output voltage of the switching power supply is reduced to enter the light-load state when the image forming apparatus enters the power-saving state in response to an instruction from the controller 300.

In such a light load state, a switching power supply mounting the above-described line filter enables further reducing the power consumption since there is no discharge resistor. The switching power supply mounting the above-described line filter is applicable also to a low-voltage power supply not only for an image forming apparatus but also for other electronic apparatuses.

While the present invention has been described with reference to exemplary embodiments, it is to be understood that the invention is not limited to the disclosed exemplary embodiments. The scope of the invention is defined by the appended claims.

## Claims

1. A line filter for a switching power supply, the switching power supply including rectifier means (3) configured to rectify an AC voltage, a transformer (7) configured to transform the voltage rectified by the rectifier means (3), and switching means (8) configured to drive the transformer, the line filter comprising:
radiation means (9) configured to radiate heat generated during operation of the switching means (8);
two series-connected capacitive elements (13, 14) configured to be connected between voltage supply lines to which the rectifier means (3) and the transformer (7) are configured to be connected, a third capacitive element (4) configured to be connected between the voltage supply lines on the AC voltage input side of the rectifier means (3), and a fourth capacitive element (5) configured to be connected between the rectifier means (3) and the two series-connected capacitive elements (13, 14); and
a current path (12, 15) configured to allow a noise current to flow between the transformer (7) and the two series-connected capacitive elements (13, 14), wherein the current path includes:
a first line (12) configured to connect the radiation means (9) and a primary side of the transformer (7); and
a second line (15) configured to connect a connecting portion of the two series-connected capacitive elements (13, 14) and a secondary side of the transformer (7).

2. A line filter according to claim 1, wherein the current path includes the first line (12) which is configured to be connected to the radiation means (9) and a ground side line (2) of the power supply lines on the primary side of the transformer (7) .

3. A line filter according to claim 1 or claim 2, wherein the current path includes the second line (15) which is configured to be connected to the connecting portion of the capacitive elements (13, 14) and a ground side line (2) of the power supply lines on the secondary side of the transformer (7) .

4. A line filter according to any preceding claim, wherein capacitance of the third capacitive element (4) is smaller than capacitance of the fourth capacitive element (5).

5. A line filter according to any preceding claim, further comprising a choke coil (16) configured to be connected between the fourth capacitive element (5) and the two series-connected capacitive elements (13, 14).

6. A line filter according to any one of any preceding claim, further comprising two series-connected capacitive elements (21, 22) and a choke coil (23) provided between the voltage supply lines on the AC voltage input side of the rectifier means (3) .

7. A switching power supply comprising:
rectifier means (3) configured to rectify an AC voltage;
a transformer (7) configured to transform the voltage rectified by the rectifier means (3);
switching means (8) configured to drive the transformer (7); and
a line filter according to any one of claims 1 to 6.

8. An image forming apparatus (200) comprising:
control means (300) configured to control operation of the image forming apparatus (200); and
the switching power supply according to claim 7 for supplying electric power to the control means (300).

## Patentansprüche

1. Netzfilter für ein Schaltnetzteil, wobei das Schaltnetzteil beinhaltet: einen Gleichrichter (3), der konfiguriert ist, eine Wechselspannung gleichzurichten, einen Transformator (7), der zum Transformieren der durch den Gleichrichter (3) gleichgerichteten Spannung konfiguriert ist, und eine Schalteinrichtung (8), die zum Ansteuern des Transformators konfiguriert ist, wobei das Netzfilter umfasst:
eine Abstrahlungseinrichtung (9), die konfiguriert ist, während des Betriebs der Schalteinrichtung (8) erzeugte Wärme abzustrahlen;
zwei in Reihe geschaltete kapazitive Elemente (13, 14), die konfiguriert sind, zwischen Spannungszuführleitungen geschaltet zu sein, mit welchen verbunden zu sein der Gleichrichter (3) und der Transformator (7) konfiguriert sind, ein drittes kapazitives Element (4), das konfiguriert ist, zwischen den Spannungszuführleitungen auf der Wechselspannungseingangsseite des Gleichrichters (3) geschaltet zu sein, und ein viertes kapazitives Element (5), das konfiguriert ist, zwischen dem Gleichrichter (3) und den beiden in Reihe geschalteten kapazitiven Elementen (13, 14) geschaltet zu sein; und
einen Stromweg (12, 15), der konfiguriert ist, einem Rauschstrom das Fließen zwischen dem Transformator (7) und den beiden in Reihe geschalteten kapazitiven Elementen (13, 14) zu ermöglichen, wobei der Stromweg umfasst:
eine erste Leitung (12), die konfiguriert ist, die Abstrahlungseinrichtung (9) und eine Primärseite des Transformators (7) zu verbinden; und
eine zweite Leitung (15), die konfiguriert ist, einen Verbindungsabschnitt der beiden in Reihe geschalteten kapazitiven Elemente (13, 14) und eine Sekundärseite des Transformators (7) zu verbinden.

2. Netzfilter nach Anspruch 1, wobei der Strompfad die erste Leitung (12), die konfiguriert ist, mit der Abstrahlungseinrichtung (9) verbunden zu sein, sowie eine erdseitige Leitung (2) der Spannungszuführleitungen auf der Primärseite des Transformators (7) enthält.

3. Netzfilter nach Anspruch 1 oder Anspruch 2, wobei der Strompfad die zweite Leitung (15), die konfiguriert ist, mit dem Verbindungsabschnitt der kapazitiven Elemente (13, 14) verbunden zu sein, sowie eine erdseitige Leitung (2) der Spannungszuführleitungen auf der Sekundärseite des Transformators (7), enthält.

4. Netzfilter nach einem vorhergehenden Anspruch, wobei eine Kapazität des dritten kapazitiven Elements (4) kleiner ist als eine Kapazität des vierten kapazitiven Elements (5).

5. Netzfilter nach einem vorhergehenden Anspruch, weiterhin umfassend eine Drosselspule (16), die konfiguriert ist, zwischen das vierte kapazitive Element (5) und die beiden in Reihe geschalteten kapazitiven Elemente (13, 14) geschaltet zu sein.

6. Netzfilter nach einem vorhergehenden Anspruch, weiterhin umfassend zwei in Reihe geschaltete kapazitive Elemente (21, 22) und eine Drosselspule (23), die zwischen den Spannungszuführleitungen auf der Wechselspannungseingangsseite des Gleichrichters (3) vorgesehen sind.

7. Schaltnetzteil, umfassend:
einen Gleichrichter (3), der konfiguriert ist, eine Wechselspannung gleichzurichten;
einen Transformator (7), der konfiguriert ist, die durch den Gleichrichter (3) gleichgerichtete Spannung zu transformieren;
eine Umschalteinrichtung (8), die konfiguriert ist, den Transformator (7) anzusteuern; und
ein Netzfilter nach einem der Ansprüche 1 bis 6.

8. Bildaufnahmevorrichtung (200), umfassend:
eine Steuereinrichtung (300), die konfiguriert ist, einen Betrieb der Bildaufnahmevorrichtung (200) zu steuern; und
das Schaltnetzteil nach Anspruch 7 zum Zuführen von elektrischem Strom zur Steuereinrichtung (300).

## Revendications

1. Filtre antiparasite destiné à une alimentation à découpage, l'alimentation à découpage comprenant un moyen redresseur (3) configuré pour redresser une tension alternative, un transformateur (7) configuré pour transformer la tension redressée par le moyen redresseur (3), et un moyen de commutation (8) configuré pour piloter le transformateur, le filtre antiparasite comprenant :
un moyen de rayonnement (9) configuré pour faire rayonner de la chaleur générée durant le fonctionnement du moyen de commutation (8) ;
deux éléments capacitifs connectés en série (13, 14) configurés pour être connectés entre des lignes d'alimentation en tension, le moyen redresseur (3) et le transformateur (7) étant configurés pour y être connectés, un troisième élément capacitif (4) configuré pour être connecté entre les lignes d'alimentation en tension du côté entrée de tension alternative du moyen redresseur (3), un quatrième élément capacitif (5) configuré pour être connecté entre le moyen redresseur (3) et les deux éléments capacitifs connectés en série (13, 14) ; et
un trajet de courant (12, 15) configuré pour permettre une circulation d'un courant de bruit entre le transformateur (7) et les deux éléments capacitifs connectés en série (13, 14), où le trajet de courant comprend :
une première ligne (12) configurée pour connecter le moyen de rayonnement (9) et un côté primaire du transformateur (7) ; et
une seconde ligne (15) configurée pour connecter une partie de connexion des deux éléments capacitifs connectés en série (13, 14) et un côté secondaire du transformateur (7).

2. Filtre antiparasite selon la revendication 1, dans lequel le trajet de courant comprend une première ligne (12) qui est configurée pour être connectée au moyen de rayonnement (9) et à une ligne côté terre (2) des lignes d'alimentation du côté primaire du transformateur (7).

3. Filtre antiparasite selon la revendication 1 ou la revendication 2, dans lequel le trajet de courant comprend la seconde ligne (15) qui est configurée pour être connectée à la partie de connexion des éléments capacitifs (13, 14) et à une ligne côté terre (2) des lignes d'alimentation du côté secondaire du transformateur (7).

4. Filtre antiparasite selon l'une quelconque des revendications précédentes, dans lequel une capacité du troisième élément capacitif (4) est inférieure à une capacité du quatrième élément capacitif (5).

5. Filtre antiparasite selon l'une quelconque des revendications précédentes, comprenant en outre une bobine d'arrêt (16) configurée pour être connectée entre le quatrième élément capacitif (5) et les deux éléments capacitifs connectés en série (13, 14).

6. Filtre antiparasite selon l'une quelconque des revendications précédentes, comprenant en outre deux éléments capacitifs connectés en série (21, 22) et une bobine d'arrêt (23) disposée entre les lignes d'alimentation en tension du côté entrée de tension alternative du moyen redresseur (3).

7. Alimentation à découpage, comprenant :
un moyen redresseur (3) configuré pour redresser une tension alternative ;
un transformateur (7) configuré pour transformer la tension redressée par le moyen redresseur (3) ;
un moyen de commutation (8) configuré pour piloter le transformateur (7) ; et
un filtre antiparasite selon l'une quelconque des revendications 1 à 6.

8. Appareil de formation d'image (200), comprenant :
un moyen de commande (300) configuré pour commander le fonctionnement de l'appareil de formation d'image (200) ; et
l'alimentation à découpage selon la revendication 7 destinée à alimenter en courant électrique le moyen de commande (300).
